# EUROPÄISCHE PATENTSCHRIFT

(11) **EP 2 515 077 B1**
(45) Veröffentlichungstag und Bekanntmachung des Hinweises auf die Patenterteilung: **03.10.2018**
(21) Anmeldenummer: 12002002.9
(22) Anmeldetag: 21.03.2012
(51) Int. Cl.: G01C 19/72

(54) **Unterdrückung von Quantisierungsrauschen beim faseroptischen Sagnac-Interferometer**
Suppression of quantization noise in fibre optic Sagnac interferometer
Suppression de bruits de quantification dans l'interféromètre Sagnac à fibre optique

(30) Priorität: 21.04.2011 DE 102011018468
(43) Veröffentlichungstag der Anmeldung: 24.10.2012
(73) Patentinhaber: Northrop Grumman LITEF GmbH, 79115 Freiburg (DE)
(72) Erfinder: Deppe-Reibold, Olaf, 79312 Emmendingen (DE)
(74) Vertreter: Müller Hoffmann & Partner

(56) Entgegenhaltungen:
- EP-A1- 0 168 292
- EP-A2- 2 154 477

## Beschreibung

Die Erfindung betrifft ein faseroptisches Sagnac-Interferometer sowie ein Verfahren zum Steuern eines faseroptischen Sagnac-Interferometers.

Faseroptische Sagnac-Interferometer kommen regelmäßig in Luft- und Wasserfahrzeugen zum Einsatz, jedoch ist ein Einsatz in Landfahrzeugen ebenfalls möglich. Ihr Vorteil liegt in einer autonomen Bestimmung der Lage im Raum, die bei einer gleichzeitigen Kenntnis einer Bewegungsgeschwindigkeit eine genaue Positionsbestimmung des Fahrzeugs erlaubt. Dazu müssen keine entsprechende Daten zur Orientierung von außerhalb, etwa über ein GPS-Signal oder per Satellitenkommunikation bereitgestellt werden.

Faseroptische Sagnac-Interferometer sind meist Bestandteile von Inertialen Navigationssystemen, mit denen sich die Lage bzw. die Drehbewegung von Objekten im Raum bestimmen lässt. Eine derartige Bestimmung beruht auf einem Registrieren von Drehraten und Beschleunigungen, die auf das Objekt bezüglich der drei Raumachsen des Inertialen Navigationssystems wirken. Durch die Kenntnis von Drehraten und Beschleunigungen, die auf ein Objekt über einen bestimmten Zeitverlauf wirken, ist eine genaue Bestimmung der Position des Objekts relativ zur Ausgangsposition möglich. Bei einer exakten Kenntnis der Ausgangsposition ist stets auch die aktuelle absolute Position des Objekts im Raum bestimmbar.

Inertiale Navigationssysteme sind auf vielfältige Weise realisierbar, wobei in der Regel ein Erfassen von auf ein Objekt wirkenden Drehraten und Beschleunigungen einer Positionsbestimmung zugrunde liegt. Anstelle von mechanischen Effekten können auch optische Effekte für Inertiale Navigationssysteme ausgenutzt werden. Ein derartiges Inertiales Navigationssystem kann auf wenigstens einem faseroptischen Sagnac-Interferometer basieren. Dieses nutzt den Sagnac-Effekt aus, gemäß dem bei einer Rotation einer optischen Lichtleiterschleife um ihre Normale, eine Phasendifferenz zwischen zwei in der Lichtleiterschleife entgegengesetzt laufenden Lichtwellen auftritt. Bei der Beobachtung des aus der Lichtleiterschleife austretenden und überlagerten Lichts der beiden entgegengesetzt laufenden Lichtwellen wird während der Rotation eine Intensitätsänderung sichtbar, die durch eine Inteferometerkennlinie beschrieben werden kann, die die Intensitätsänderung in Abhängigkeit der Phasendifferenz der beiden Lichtwellen beschreibt.

Vorzugsweise wird für jede mögliche Drehung eines Objekts um eine der drei Raumachsen ein Sagnac-Interferometer bereitgestellt, sodass ein entsprechendes Inertialsystem drei Sagnac-Interferometer aufweist, deren rotationssensitive Achsen jeweils senkrecht zueinander sind. Eine Drehung um eine Achse, die nicht mit einer der Raumachsen zusammenfällt ist freilich über entsprechende Komponenten an zwei oder drei Sagnac-Interferometern erfassbar.

Die Phasenverschiebung in einem faseroptischen Sagnac-Interferometer ist direkt proportional zu der Drehgeschwindigkeit, der Weglänge des Lichtwegs in der Lichtleiterschleife bzw. einer Lichtleiterspule und dem Durchmesser des kreisförmigen Lichtwegs. Die Phasenverschiebung verhält sich außerdem umgekehrt proportional zur Wellenlänge des eingesetzten Lichts.

Die oben bereits erwähnte Interferometerkennlinie, die die Abhängigkeit der Lichtintensität, die als Beobachtungsgröße zur Bestimmung der Rotation dienen soll, von der Phasendifferenz beschreibt, ist kosinusförmig. Da eine entsprechende Transferfunktion im Maximum der Kosinus-Kurve unempfindlich gegenüber kleinen Eingangswerten ist und ein der Drehrichtung entsprechendes Vorzeichen der Phasenverschiebung nicht ermittelbar ist, wird häufig ein Arbeitspunkt des Sagnac-Interferometers derart eingestellt, dass er im Punkt einer maximalen Steigung der kosinusoiden Funktion liegt. Hierzu kommen beispielsweise Sinus- oder Rechteckmodulationen infrage. Somit soll bereits bei einer geringen Drehbewegung eine maximale Empfindlichkeit des Interferometers gewährleistet sein.

Die EP 0 168 292 A1 beschreibt die Phasenmodulation von gegensinnig umlaufenden elektromagnetischen Wellen. Hierbei ist das Modulationssignal periodisch mit Periode 2π und wird mit einem digitalen Rampensignal kombiniert.

Die EP 2 154 477 A2 beschreibt ein System und ein Verfahren zur Verbesserung der Ausgabeauflösung einer optischen Treiberschaltung in einem optischen Sensor. Der optische Sensor weist einen optischen Schaltkreis, der analoge Messdaten erzeugt, einen Detektionsschaltkreis, der die analogen Messdaten detektiert und in digitale Messdaten konvertiert, und einen Signalverarbeitungsschaltkreis auf, der die digitalen Messdaten demoduliert und ein darauf basierendes segmentiertes Digitalsignal erzeugt. Des Weiteren weist der optische Sensor eine optische Treiberschaltung auf, die ein auf dem segmentierten Digitalsignal beruhendes analoges Treibersignal erzeugt. Das analoge Treibersignal wird verwendet, um den optischen Schaltkreis zu betreiben.

In der Regel entsteht bei der Verarbeitung durch den Digital/Analog-Wandler ein Rauschen, das auf ein begrenztes Quantisierungsvermögen zurückzuführen ist und deshalb auch Quantisierungsrauschen genannt wird. Dieses Quantisierungsrauschen ist in der Lage, eine hochpräzise Drehratenmessung zu behindern.

Der Erfindung liegt die Aufgabe zugrunde, ein faseroptisches Sagnac-Interferometer anzugeben, bei dem ein auf eine Quantisierung durch einen Digital/Analog-Wandler zurückgehendes Rauschen wirksam eingedämmt wird und bei dem selbst bei sehr geringen Drehraten hochpräzise Drehratenmessungen durchführbar sind. Diese Aufgabe wird erfindungsgemäß durch den Gegenstand nach Patentanspruch 1 gelöst. Ferner wird diese Aufgabe erfindungsgemäß durch den Gegenstand nach Patentanspruch 8 gelöst. Weitere Ausführungsformen der Erfindung sind in den jeweiligen Unteransprüchen angegeben.

Ein erfindungsgemäßes faseroptisches Sagnac-Interferometer weist eine Lichtquelle, einen Polarisator, eine Faserspule, eine Photodetektoreinrichtung, einen Verstärker mit einem nachgeschalteten Analog/Digital-Wandler, einen Digital/Analog-Wandler, eine Auswerteschaltung, einen Addierer und einen Phasenmodulator auf. Synonym für das faseroptische Sagnac-Interferometer ist beispielsweise eine faseroptische Ringinterferometer-Anordnung. Dabei ist die Lichtquelle vorzugsweise dazu in der Lage, Licht mit einer bestimmbaren Wellenlänge auszustrahlen. Wie oben bereits angedeutet und im Folgenden noch genauer erläutert wird, sollen geringfügige Phasenverschiebungen ermittelt werden. Für faseroptische Sagnacinteferometer wird oft eine so genannte Superlumineszenz-Diode (SLD) als Lichtquelle eingesetzt, da diese eine höhere optische Bandbreite als eine Laserlichtquelle und dementsprechend eine kürzere Koherenzlänge aufweist. Der Vorteil einer geringen Koherenzlänge (typ. 25*µ*m) ist die Inkoherenz zwischen dem Nutzsignal und weiteren Lichtsignalen, die z.B. an Reflektions- oder Streustellen entstehen.

Der Polarisator ist dazu geeignet, das Licht der Lichtquelle zu polarisieren. Die Faserspule entspricht einer oben genannten Lichtleiterspule und besteht im Wesentlichen aus einer zu einer Spule aufgewickelten optischen Faser. Die optische Faser kann beispielsweise eine mikrostrukturierte Faser oder ein Verbund aus mikrostrukturierten Fasern sein, so dass die optische Faser vollständig oder nur teilweise aus einem Licht leitenden Material besteht. Die Photodetektoreinrichtung ist dazu geeignet, darauf auftreffendes Licht in elektrische Signale zu wandeln, sodass diese beispielsweise eine Information über eine Lichtintensität, eine Wellenlänge, eine Interferenz bzw. ein Interferenzsignal oder eine Phasenverschiebung enthalten. Der Phasenmodulator ist vor der Faserspule angeordnet und dazu geeignet, eine Phase eines Lichtstrahls zu modulieren.

Zwei aus der Lichtquelle stammende, durch den Polarisator polarisierte und durch eine Strahlteilung erzeugte Lichtstrahlen sind in zueinander entgegengesetzten Richtungen in die Faserspule einstrahlbar und anschließend wiedervereinigbar. Hierzu können etwa Anordnungen mit Spiegeln bzw. Halbspiegeln eingesetzt werden, so dass ein Lichtstrahl aus der Lichtquelle austritt, dieser aufgeteilt wird und folglich zwei aus der Lichtquelle stammende Lichtstrahlen vorliegen, die wiederum zueinander entgegengesetzt in die Faserspule eingestrahlt werden. In der Regel wird der ganze Aufbau und dabei insbesondere die Strahlteilung und - vereinigung sowie die Phasenmodulation aber mit integriert optischen Komponenten realisiert. Die beiden aus der Lichtquelle stammenden Lichtstrahlen sind mittels des in der Faserspule angeordneten Phasenmodulators unabhängig voneinander modulierbar. Mithilfe des Phasenmodulators kann also die Phase eines der beiden Lichtstrahlen oder beider Lichtstrahlen verändert werden, was einer Phasenverschiebung der beiden Lichtstrahlen zueinander entspricht.

Die Photodetektoreinrichtung ist mit dem aus der Wiedervereinigung der Lichtstrahlen entstehenden Interferenzsignal beaufschlagbar, wobei durch die Photodetektoreinrichtung ein der Lichtintensität des Interferenzsignal entsprechendes Signal lieferbar ist. Mit diesem Signal ist der Verstärker mit dem nachgeschalteten Analog/Digital-Wandler beaufschlagbar. Die Ausgangssignale des Analog/DigitalWandlers sind in der Auswerteschaltung verarbeitbar.

Mithilfe eines Hauptregelkreises der Auswerteschaltung ist ein digitales Phasenrückstellsignal erzeugbar und an den Digital/Analog-Wandler zur Gewinnung eines den Phasenmodulator beaufschlagenden Rückstellsignals lieferbar. Wie oben beschrieben, kann eine Phasenverschiebung der beiden Lichtstrahlen in der Faserspule durch den Phasenmodulator vorgenommen werden. Typischer Weise ist es gewünscht, dass der Phasenmodulator die Phasenverschiebung der beiden Lichtstrahlen so einstellt, dass der Arbeitspunkt auf der kosinusförmigen Interferometerkennlinie immer bei halber Maximalintensität liegt und damit in einem Punkt maximaler Steigung dieser Kennlinie. Um eine entsprechende Phasenverschiebung auch bei einer Drehbewegung des Interferometers stets einzustellen, wird das Rückstellsignal zum Beaufschlagen des Phasenmodulators erzeugt. Dieses Rückstellsignal gibt gleichzeitig auch den Grad einer Drehbewegung an und wird wiederum auf Grundlage des Signals der Photodetektoreinrichtung erzeugt, mit welchem der Verstärker mit nachgeschaltetem Analog/Digital-Wandler beaufschlagbar ist.

Zum besseren allgemeinen Verständnis wird die oben dargelegte Technologie im Folgenden nochmals auf andere Weise erläutert. Alle Lichtstrahlen bzw. Lichtsignale innerhalb der Faserspule liegen freilich in der analogen Domäne vor. Eine Handhabung etwa von Modulationssignalen und Signalen der Photodetektoreinrichtung bzw. des Hauptregelrkeises überhaupt erfolgt in der Auswerteschaltung in der digitalen Domäne. Zum Erlangen des für die Phasenmodulation maßgeblichen Rückstellsignals wird in der Auswerteschaltung ein Modulationssignal erzeugt. Dieses Modulationssignal steuert nach einer Umwandlung durch den Digital/Analog-Wandler als das Rückstellsignal den Phasenmodulator und damit vereinfacht ausgedrückt "den Kreisel" an. Ebenfalls vereinfacht ausgedrückt durchläuft das Rückstellsignal als Ausgangssignal des Digital/Analog-Wandlers in analogisierter Form die analoge Domäne der Interferometeranordnung oder den Kreiselpfad und gelangt daraufhin als ein der empfangenen Lichtintensität der Vereinigung der beiden Lichtstrahlen proportionales Signal zum Eingang eines Demodulators.

Der Ausgang des Analog/Digital-Wandlers und damit die in dem Hauptregelkreis verarbeiteten Ausgangssignale sowie das Phasenrückstellsignal weisen erfindungsgemäß eine erste Wortbreite auf. Der Eingang des Digital/Analog-Wandlers und damit das den Phasenmodulator beaufschlagende Modulations- und Rückstellsignal weist eine zweite Wortbreite auf. Die Wortbreite ergibt sich aus der Anzahl an Bits, die ein digitales Signal aufweist, und entspricht somit der Anzahl an Stellen, welche die das digitale Signal darstellenden Bits einnehmen können. Es wird außerdem ein Restwertsignal mit einer dritten Wortbreite erzeugt, das über den Addierer dem Ausgangssignal des Analog/Digital-Wandlers hinzufügbar ist. Insbesondere kann der Digital/Analog-Wandler aber lediglich Signale mit der zweiten Wortbreite verarbeiten, da seine Verarbeitungskapazität und sein Signaleingang entsprechend begrenzt sind. Der Anteil aus dem Signal, der nicht durch den Digital/Analog-Wandler verarbeitet wird, weist also die dritte Wortbreite auf und kann unmittelbar als das Restwertsignal verwendet werden. Insofern wird das Restwertsignal durch ein Weiterverarbeiten des Signalanteils erzeugt, der nicht durch den Digital/Analog-Wandler verarbeitet wird.

Der Addierer fügt das Restwertsignal mit der dritten Wortbreite dem Ausgangssignal des Analog/Digital-Wandlers hinzu. Letzteres weist die erste Wortbreite auf, sodass bei dem Hinzufügen des Restwertsignals durch den Addierer die Wortbreite des resultierenden Signals, also des Ausgangssignals des Addierers, nicht ändert, sondern immer noch der ersten Wortbreite entspricht.

Wie oben bereits erwähnt, entsteht in der Regel bei einer Signalverarbeitung des Digital/Analog-Wandlers ein Rauschen, das auf ein begrenztes Quantisierungsvermögen also einer Auflösung des Wandlers zurückzuführen ist und deshalb auch Quantisierungsrauschen genannt wird. Dieses Quantisierungsrauschen betrifft somit die gesamten in der analogen Domäne verarbeiteten Signale und schlägt sich folglich wiederum auf die auf den Analog/Digital-Wandler folgende Signalverarbeitung in der digitalen Domäne nieder und damit auch auf das auszugebende Drehratensignal.

Anders ausgedrückt ergeben sich freilich für unterschiedliche in der Auswerteelektronik verarbeitete Signale mit der ersten Wortbreite unterschiedliche Signale mit der dritten Wortbreite. Bei einer Betrachtung dieser Signale mit der dritten Wortbreite, insbesondere für unterschiedliche Ausgangssignale mit der ersten Wortbreite kann eine Information über die Ausprägung des Quantisierungsrauschens ermittelt werden, die als Restwertsignal über den Addierer wiederum in die Signalverarbeitung des Signals mit der ersten Wortbreite einfließt. Somit beruht die Signalverarbeitung des Signals mit der ersten Wortbreite einerseits auf der Signalverarbeitung in der Auswerteschaltung und der Signalverarbeitung in der analogen Domäne, und andererseits auf einer Information über die Ausprägung des durch den Digital/Analog-Wandler verursachten Quantisierungsrauschens. Das Restwertsignal wird dabei derart erzeugt, dass durch sein Einfließen in die Signalverarbeitung in der Auswerteschaltung bzw. in das dort verarbeitete Signal mit der ersten Wortbreite selbst, das ermittelte Quantisierungsrauschen eingedämmt und vorzugsweise vollständig kompensiert wird.

Gemäß einer Ausführungsform der Erfindung arbeiten die Auswerteschaltung, der Analog/Digital-Wandler und der Digital/Analog-Wandler in durch einen Taktgeber vorgegebenen und synchronisierten Takten. Dies stellt eine übliche Arbeitsweise einer digitalen Schaltung dar. Allerdings weist gemäß dieser Ausführungsform das Sagnac-Interferometer einen Restwertdifferenz-Berechnungsabschnitt zum Berechnen einer Restwertdifferenz zwischen dem Restwertsignal eines ersten Taktes und dem Restwertsignal eines weiteren Taktes auf. Eine durch den Restwertdifferenz-Berechnungsabschnitt erzeugte Restwertdifferenz ist also aus der Differenz zweier oben beschriebener in Bezug auf den Eingang des Digital/Analog-Wandlers restlicher bzw. überschüssiger Signale mit der dritten Wortbreite herstellbar. Zwar besteht die Restwertdifferenz aus einer Differenz zwischen zwei Restwertsignalen, jedoch kann es selbst auch als Restwertsignal aufgefasst werden, da es ein Signal ist, das aus überzähligen Bits von Signalen mit der ersten Wortbreite erzeugbar ist. Die Restwertdifferenz liefert eine hervorragende Möglichkeit, das Quantisierungsrauschen bzw. genauer gesagt dessen Auswirkung auf die Signalverarbeitung in der digitalen wie auch analogen Domäne zu bestimmen. Die Restwertdifferenz wird erfindungsgemäß als einem Phasenfehler bei der Modulation entsprechend angesehen. Somit ist ein Phasenfehler aus der Restwertdifferenz bestimmbar.

Die oben beschriebenen Rückführungen des Restwertsignals bzw. der Restwertdifferenz können folgendermaßen in Kurzform zusammengefasst werden. Ein Restwertsignal mit der dritten Wortbreite wird aus überzähligen Bits eines Signals erzeugt, indem der Bit-Überhang, also der Signalanteil des Signals mit den niederwertigen-Bits der nicht an den Digital-/Analogwandler angelegt werden kann und damit die dritte Wortbreite ausweist, als das Restwertsignal verwendet wird und von dem anschließend die Differenz zweier aufeinanderfolgender Takte gebildet wird.

Bereits das Vorliegen der Restwertdifferenz stellt eine Information dar, aufgrund deren sich Maßnahmen ergreifen lassen, welche das Quantisierungsrauschen verringern.

Gemäß einer weiteren Ausführungsform weist das faseroptische Sagnac-Interferometer eine Restwertdifferenz-Speichereinheit zum Speichern der Restwertdifferenz auf. Diese Zwischenspeicherung sorgt dafür, dass der richtige Analog-/Digitalwandlerwert, also derjenige, der in der zeitlichen Abfolge des Modulationsmusters mit den Digital-/Analogwandlerwerten, aus denen die Restwertdifferenz entstanden ist, korrelliert ist.

Gemäß einer weiteren Ausführungsform weist das faseroptische Sagnac-Interferometer einen ersten Multiplizierer auf zum Multiplizieren der Restwertdifferenz mit einem in der Auswerteschaltung erzeugten Modulationsbit. Ein dem Phasenfehler entsprechender Fehler des Analog/Digital-Wandlers kann dadurch ermittelt werden, dass die Restwertdifferenz mit der Verstärkung des gesamten Analogpfades, also der Signalverarbeitung in der analogen Domäne des "Kreisels" gewichtet wird. Das Vorzeichen der Verstärkung ist dabei abhängig von dem Vorzeichen des aktuellen Modulationsbits, sodass die Restwertdifferenz damit multipliziert wird. Durch die zuvor genannte erste Multiplikation ist zunächst ein vorzeichenkorrigiertes Restwertsignal erzeugbar.

Es ist nun möglich, einen zweiten Multiplizierer bereitzustellen zum Multiplizieren des vorzeichenkorrigierten Restwertsignals mit einem Betrag eines Verstärkungssignals eines Verstärkungsreglerstellglieds der Auswerteschaltung. Dies entspricht dem oben erwähnten Gewichten der Restwertdifferenz mit der Verstärkung des gesamten Analogpfades. Folglich ist aus dem vorzeichenkorrigierten Restwertsignal ein verstärktes vorzeichenkorrigiertes Restwertsignal erzeugbar .

Gemäß einem faseroptischen Sagnac-Interferometer nach einer weiteren Ausführungsform ist der Betrag des Verstärkungssignals durch ein Invertieren eines Ausgangssignals des Verstärkungsreglerstellglieds erzeugbar. Das Verstärkungsreglerstellglied bewirkt eine Einstellung der Verstärkung der gesamten Regelschleife, sodass der vorliegende Wert stets auf eins gehalten wird. Das Produkt aus der gesamten analogen Verstärkung und dem Verstärkungsreglerstellglied ist folglich eins.

Gemäß einer weiteren Ausführungsform weist das faseroptische Sagnac-Interferometer einen Restwertdifferenz-Addierer zum Addieren des Ausgangs des Analog/Digital-Wandlers mit dem verstärkten vorzeichenkorrigierten Restwertsignal auf, sodass der Signalausgang des Addierers in dem Hauptregelkreis verarbeitbar ist. Die Signalverarbeitung im Hauptregelkreis betrifft somit das eigentliche Ausgangssignal des Analog/Digitalwandlers, das für sich alleine dem aktuellen Phasenfehler aufgrund eines Quantisierungsrauschens unterliegt, und zusätzlich das aufaddierte verstärkte und vorzeichenkorrigierte Restwertsignal zum Kompensieren des Phasenfehlers. Somit geht das verstärkte vorzeichenkorrigierte Restwertsignal in die Regelung in dem Hauptregelkreis, also auch die Signalverarbeitung zur Erzeugung des Modulationssignals bzw. des Phasenrückstellsignals und vor allem des Drehratensignals und schließlich des Rückstellsignals für den Phasenmodulator mit ein.

Gemäß einer weiteren Ausführungsform ist bei einem faseroptischen Sagnac-Interferometer mithilfe des Hauptregelkreises das digitale Phasenrückstellsignal auf der Grundlage des Signalausgangs des Addierers erzeugbar. Ferner ist es an den Digital/Analog-Wandler zur Gewinnung des den Phasenmodulator beaufschlagenden Rückstellsignals lieferbar.

Vereinfacht lässt sich dies folgendermaßen darstellen. Im Idealfall ist für eine Kompensation eines aufgrund eines Quantisierungsrauschens entstehenden Phasenfehlers der Phasenfehler selbst bereits zu Beginn des Takts bekannt, in dem er entsteht bzw. sich auf die Signalverarbeitung in der analogen wie auch der digitalen Domäne auswirkt. Dies ist möglich, da der Phasenfehler mithilfe einer Restwertdifferenz für zwei unmittelbar aufeinander folgende Takte bestimmt wird. Die Kompensierung eines früheren Phasenfehlers in den zu einem späteren Takt ausgelesenen Analog-/Digitalwandlerdaten ist demnach eine besonders vorteilhafte Möglichkeit, das Quantisierungsrauschen zu unterdrücken. Im Idealfall wird das Quantisierungsrauschen vollständig ausgeglichen, jedoch zeigt sich nach der oben beschriebenen Lösung jedenfalls ein annähernd perfekter Ausgleich.

Nochmals vereinfacht lässt sich oben Beschriebenes folgendermaßen zusammenfassen. Das Modulationssignal wird in der Auswerteschaltung mit einer höheren Wortbreite berechnet, als die Wortbreite des Eingangs des Digital/Analog-Wandlers. Die aufgrund des Unterschieds der Wortbreiten überschüssigen Anteile, also quasi niederwertigen Bits, die nicht am Digital/Analog-Wandler angelegt werden können, werden als Rest aufgefasst und es wird die Differenz zum im vorangehenden Kreiseltakt entstandenen Rest gebildet. Diese Differenz ist die oben beschriebene Restwertdifferenz, die einem Phasenfehler bei der Modulation entspricht. Um nun den entsprechenden Fehler des Analog/Digital-Wandlers zu ermitteln, wird diese Restwertdifferenz mit der Verstärkung des gesamten Analogpfads, also der Signalverarbeitung in der analogen Domäne gewichtet. Das Vorzeichen der Verstärkung ist abhängig vom Vorzeichen des aktuellen Modulationsbits des Modulationssignals in der Auswerteschaltung, so dass die Restwertdifferenz damit multipliziert wird. Der entsprechende Betrag der Verstärkung kann durch ein Invertieren eines Gainreglerstellglieds der Auswerteschaltung gewonnen werden und ist demnach aufgrund bereits kontinuierlich ablaufenden Messungen in der Auswerteschaltung eine bekannte Größe der Signalverarbeitung. Schließlich wird die derart gewonnene Korrektur unter einer Berücksichtigung von im nicht-Idealfall typischer Weise auftretenden Totzeiten zum Wert bzw. Ausgangssignal des Analog/Digital-Wandlers hinzuaddiert. Somit wird stets ein auf ein Quantisierungsrauschen zurückgehender Phasenfehler nahezu vollständig kompensiert.

Dabei ist es besonders vorteilhaft, dass das den Phasenfehler darstellende Restwertsignal auf dem Signalanteil des Signals mit der ersten Wortbreite beruht, der nicht in den Digital/Analog-Wandler eingegeben wird, also auf den Signalanteil, der das oben beschriebene Restsignal mit der dritten Wortbreite darstellt . Dieses Restsignal wird nicht durch den Digital/Analog-Wandler verarbeitet und erlaubt somit einen nahezu unverfälschten Rückschluss auf einen Phasenfehler.

Gemäß einem Verfahren zum Steuern eines faseroptischen Sagnac-Interferometers mit einer Lichtquelle, einem Polarisator, einer Faserspule, einer Photodetektoreinrichtung, einem Verstärker mit einem nachgeschalteten Analog/Digital-Wandler, einem Digital/Analog-Wandler, einer Auswerteschaltung und einem Addierer werden zwei aus der Lichtquelle stammende, durch den Polarisator polarisierte und durch eine Strahlteilung erzeugte Lichtstrahlen in zueinander entgegengesetzten Richtungen in die Faserspule eingestrahlt und anschließend wiedervereinigt. Die Photodetektoreinrichtung wird mit dem aus der Wiedervereinigung der Lichtstrahlen entstehenden Interferenzsignal nach Durchlauf durch den Polarisator beaufschlagt, wobei durch die Photodetektoreinrichtung ein der Lichtintensität des Interferenzsignals entsprechendes Signal geliefert wird, mit dem der Verstärker mit dem nachgeschalteten Analog/Digital-Wandler beaufschlagt wird, dessen Ausgangssignale in der Auswerteschaltung verarbeitet werden. Ferner wird mithilfe eines Hauptregelkreises der Auswerteschaltung ein digitales Phasenrückstellsignal erzeugt und an den Digital/Analog-Wandler zur Gewinnung eines den Phasenmodulator beaufschlagenden Rückstellsignals geliefert. Der Ausgang des Analog/Digital-Wandlers und damit die in dem Hauptregelkreis verarbeiteten Ausgangssignale sowie das Phasenrückstellsignal weisen dabei eine erste Wortbreite auf. Der Eingang des Digital/Analog-Wandlers und damit das den Phasenmodulator beaufschlagende Rückstellsignal weist jedoch eine zweite Wortbreite auf.

Gemäß einer Ausführungsform des Verfahrens arbeiten die Auswerteschaltung, der Analog/Digital-Wandler und der Digital/Analog-Wandler in durch einen Taktgeber vorgegebenen und synchronisierten Takten. Dabei weist das Sagnac-Interferometer einen Restwertdifferenz-Berechnungsabschnitt zum Berechnen einer Restwertdifferenz zwischen dem Restwertsignal eines ersten Taktes und dem Restwertsignal eines darauffolgenden Taktes auf. Die Restwertdifferenz weist dabei die dritte Wortbreite auf, da sie aus zwei Restwertsignalen unterschiedlicher Takte gebildet wird, die jeweils die dritte Wortbreite aufweisen.

Die Restwertdifferenz wird gemäß einer weiteren Ausführungsform über den Addierer dem Ausgangssignal des Analog/Digital-Wandlers hinzugefügt, so dass das entsprechende resultierende Signal in der Auswerteschaltung verarbeitet wird. Die Restwertdifferenz wird aus zwei unterschiedlichen Restwertsignalen erzeugt wird, sei hier aber auch als ein Restwertsignal verstanden. Zwar stellt die Restwertdifferenz kein Restwertsignal dar, das einem einzigen Takt zugeordnet werden kann, jedoch wird die Restwertdifferenz aus Restwertsignalen erzeugt. Ferner kann eine Restwertdifferenz als Restwertsignal für zwei aufeinander folgende Takte verstanden werden.

Die oben beschriebenen sowie weitere Vorteile und Merkmale der Erfindung werden nachfolgend anhand von Beispielen unter Zuhilfenahme der begleitenden Figur näher erläutert. Hierbei zeigt:

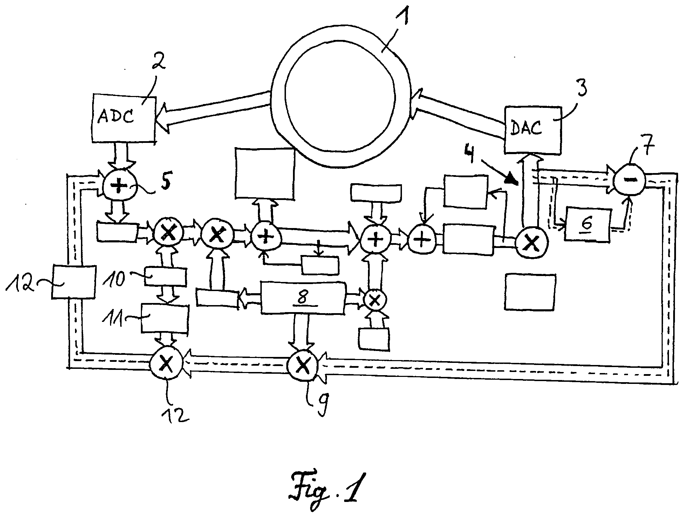

- **Fig. 1**: ein in skizzierter Form dargestellte Regelkreis, der bei einem faseroptischen Sagnac-Interferometer gemäß einer Ausführungsform der Erfindung anwendbar ist.

Die in Fig. 1 dargestellten Zusammenhänge werden zum besseren Verständnis der Erfindung wiedergegeben, betreffen jedoch lediglich eine Ausführungsform der Erfindung. Es werden insbesondere auch Komponenten oder Signalverarbeitungen dargestellt, die dem Verständnis dienlich sein und eine praktische Umsetzung erläutern sollen, jedoch zur Umsetzung der Erfindung nicht zwingend erforderlich sind.

In Fig. 1 ist eine Faserspule 1 eines Sagnac-Interferometers symbolisch dargestellt. Das Sagnac-Interferometer weist ferner eine Lichtquelle und einen Polarisator auf, die hier jedoch nicht abgebildet sind.

In der Faserspule 1 verlaufende Lichtstrahlen und damit also die Faserspule 1 durchlaufende Signale liegen in der analogen Domäne vor. Um eine adäquate Signalverarbeitung für die gewünschte Phasenmodulation in der Faserspule 1 durchzuführen, wird die Signalverarbeitung in einer Auswerteschaltung in der digitalen Domäne vorgenommen. Dementsprechend wird der Lichtausgang bzw. der Signalausgang der Faserspule 1 einem mit ADC (Analog/Digital Converter) bezeichneten Analog/Digital-Wandler 2 zugeführt. Dem Modulator in der Faserspule 1 selbst wird dementsprechend der Signalausgang eines mit DAC (Digital Analog Converter) bezeichneten Digital/Analog-Wandlers 3 zugeführt.

Zwei aus der Lichtquelle stammende, durch den Polarisator polarisierte und durch eine Strahlteilung erzeugte Lichtstrahlen sind in zueinander entgegengesetzten Richtungen in die Faserspule 1 einstrahlbar und anschließend wiedervereinigbar und die beiden Lichtstrahlen sind mittels eines in der Faserspule 1 angeordneten Phasenmodulators modulierbar, der nicht abgebildet ist. Der Phasenmodulator vermag aufgrund eines entsprechenden an ihn bereitgestellten Rückstellsignals eine Phasenverschiebung der beiden in der Faserspule 1 verlaufenden Lichtstrahlen gegeneinander zu bewirken.

Dazu ist die Photodetektoreinrichtung mit dem aus der Wiedervereinigung der Lichtstrahlen entstehenden Interferenzsignal beaufschlagbar, wobei durch die Photodetektoreinrichtung ein der Lichtintensität des Interferenzsignals entsprechendes Signal lieferbar ist, mit dem ein Verstärker mit dem nachgeschalteten Analog/Digital-Wandler 2 beaufschlagbar ist, dessen Ausgangssignale in der Auswerteschaltung verarbeitbar sind. Mithilfe eines Hauptregelkreises der Auswerteschaltung ist dann ein digitales Phasenrückstellsignal erzeugbar und an den Digital/Analog-Wandler 3 zur Gewinnung des den Phasenmodulator beaufschlagenden Rückstellsignals lieferbar.

Der Ausgang des Analog/Digital-Wandlers 2 und damit die in dem Hauptregelkreis verarbeiteten Ausgangssignale sowie das Phasenrückstellsignal weisen eine erste Wortbreite auf. Der Eingang des Digital/Analog-Wandlers 3 und damit das den Phasenmodulator beaufschlagende Rückstellsignal weist eine zweite Wortbreite auf, die kleiner ist als die Wortbreite, mit der im digitalen Teil des Hauptregelkreises das Modulations- und Rückstellsignal berechnet werden. Dies ist dadurch begründet, dass der Eingang des Digital/Analog-Wandlers 3 lediglich Signale mit der zweiten Wortbreite zulässt. Den Überhang aus niederwetigen Bits bilden Signale mit einer dritten Wortbreite. Die Signale mit der dritten Wortbreite sind in der Fig. 1 gestrichelt gekennzeichnet. Pfeil 4 zeigt außerdem, an welcher Stelle im Regelkreis das Signal mit der dritten Wortbreite abgezweigt wird, so dass am Eingang des Digital/Analog-Wandlers 3 das vollständig handhabbare Signal mit der zweiten Wortbreite anlegbar ist. Der gestrichelt gekennzeichnete Signalpfad und die zugehörige Signalverarbeitung kann als Hilfsregelkreis bezeichnet werden, der zusammen mit dem übrigen Regelkreis bzw. der entsprechenden Signalverarbeitung als Hauptregelkreis die Auswerteschaltung bildet.

Die Signale mit der dritten Wortbreite, die den Überhang an Bits darstellen, bilden wenigstens ein Restwertsignal. Dieses wenigstens eine Restwertsignal ist über einen Addierer 5 dem Ausgangssignal des Analog/Digital-Wandlers 2 hinzufügbar.

Das Restwertsignal kann, wie bereits gezeigt, lediglich aus dem Überhang an Bits des Signals mit der ersten Wortbreite bezüglich dem Eingangssignal des Digital/Analog-Wandlers mit der zweiten Wortbreite erzeugt werden.

Der Regelkreis in Fig. 1, also auch die gesamte zugrunde liegende Auswerteschaltung mit Hauptregelkreis und Hilfsregelkreis arbeitet in durch einen Taktgeber vorgegebenen Takten. Somit ist es möglich, dass ein Restwertsignal eines ersten Takts und ein weiteres Restwertsignal eines weiteren Takts erzeugt werden und die Differenz dieser beiden Restwertsignale gebildet wird. Dies ist durch das Regelglied 6, das ein Restwertsignal eines einem aktuellen Takt vorangehenden Takt liefert und den Subtrahierer 7 dargestellt. Die Restwertdifferenz kann wiederum als eine Art Restwertsignal aufgefasst werden. Sie entspricht einem Phasenfehler bei der Modulation. Um diesen Phasenfehler zu kompensieren soll der Ausgang des Analog/Digital-Wandlers 3, in dem der Phasenfehler zunächst noch unkorrigiert enthalten ist, zu einem entsprechend korrigierten Signal verändert werden. Das Vorzeichen der Verstärkung ist abhängig vom Modulationsbit des aktuellen Takts.Das Modulationsbit bestimmt ob das einem Phasenhub von pi/2 entsprechende Modulationssignal, welches benötigt wird um die Punkte maximaler Steigung auf der Interferometerkennlinie anzusteuern, mit positivem oder negativem Vorzeichen zum Rückstellsignal hinzuaddiert wird. Deshalb wird das Restwertsignal in Form der Restwertdifferenz mit dem Modulationsbit aus dem Glied 8 durch den Multiplizierer 9 multipliziert. Das dabei resultierende Signal aus der Restwertdifferenz als Restwertsignal und dem Modulationsbit wird als vorzeichenkorrigiertes Restwertsignal bezeichnet.

Der Betrag der Verstärkung wird durch eine Invertierung des Verstärkungsreglerstellglieds bzw. Gainreglerstellglieds 10 gewonnen werden, wobei der Inverter 11 die Invertierung vornimmt und der Mutiplizierer 12 das invertierte Signal des Gainreglerstellglieds 10 mit dem vorzeichenkorrigierten Restwertsignal multipliziert. Das Resultat aus der Multiplikation ist ein verstärktes vorzeichenkorrigiertes Restwertsignal. Das verstärkte vorzeichenkorrigierte Restwertsignal durchläuft ein Verzögerungsglied 12, mithilfe dessen in dem realen System auftretende Totzeiten durch technisch bedingte voneinander abweichende Signallaufzeiten kompensiert werden.

Das verstärkte vorzeichenkorrigierte Restwertsignal, das auch als verstärkte vorzeichenkorrigierte Restwertdifferenz verstanden werden kann, wird schließlich in seiner Totzeiten kompensierenden Form zum Ausgangssignal des Analog/DigitalWandlers 2 über den Addierer 5 hinzuaddiert.

Dabei liegt das Ausgangssignal des Analog/Digital-Wandlers 2 wie bereits gezeigt mit der ersten Wortbreite vor, wohingegen das verstärkte Vorzeichenkorrigierte Restwertsignal mit der dritten Wortbreite vorliegt. Bei der Addition der Signale durch den Addierer 5 ändert sich jedoch freilich die Wortbreite des Ausgangssignals des Analog/Digital-Wandlers 5 nicht, sondern behält die erste Wortbreite bei.

Auf die hier skizzierte Weise kann stets aus zwei Takten eine Restwertdifferenz, die den Grad eines durch die Quantisierung des Digital/Analog-Wandlers 3 erzeugten Phasenfehlers bei der Modulation beschreibt, bestimmt werden und die entsprechende Information wird dann direkt zum Kompensieren des durch den Phasenfehler hervorgerufenen Meßfehlers in der Lichtintensität am Photodetektor ausgenutzt. Die Information über die Lichtintensität enthalten die Ausgabewerte des Analog-/Digitalwandlers. Dementsprechend wird auf diese die Korrektur angewendet.

Allein das beschriebene Restwertsignal entspricht bereits einem Phasenfehler bei der Modulation. Da der Arbeitspunkt auf der entsprechenden Kennlinie des Sagnacinterferometers aber durch die Differenz zweier aufeinander folgender Modulationssignale bestimmt wird, führt ein Differenzieren der Restwertsignale auf den Fehler im Detektorsignal, mit dem gerade die tatsächliche Lage des Arbeitspunktes gemessen wird. Die Aneinanderreihung des Differenzierers, der Vorzeichenkorrektur, der Verstärkungsmultiplikation und des Verzögerungsglied kann auch als eine Abbildung des Interferometers verstanden werden, mit der die Auswirkung der Quantisierungsfehler voraussagbar ist, um diese Auswirkung dann zu kompensieren. Die Nachbildung ist dabei nicht für alle denkbaren Arbeitspunkte anwendbar, sondern für das konkrete Interferometer mit seinen Dimensionierungen und Parametern, wie sie sich in der Nachbildung niederschlagen, da sie die Interferometerkennlinie im Bereich der jeweils momentan verwendeten Arbeitspunkte bei halber Maximalintensität linearisiert.

## Patentansprüche

1. Faseroptisches Sagnac-Interferometer mit einer Lichtquelle, einem Polarisator, einer Faserspule (1), einer Photodetektoreinrichtung, einem Verstärker mit einem nachgeschalteten Analog/Digital-Wandler (2), einem Digital/AnalogWandler (3), einer Auswerteschaltung mit einem Addierer (5) und einem ersten Multiplizierer (9), und einem Phasenmodulator, wobei zwei aus der Lichtquelle stammende, durch den Polarisator polarisierte und durch eine Strahlteilung erzeugte Lichtstrahlen in zueinander entgegengesetzten Richtungen in die Faserspule (1) einstrahlbar und anschließend wiedervereinigbar sind und die beiden Lichtstrahlen mittels des in der Faserspule (1) angeordneten Phasenmodulators modulierbar sind,
die Photodetektoreinrichtung mit dem aus der Wiedervereinigung der Lichtstrahlen entstehenden Interferenzsignal beaufschlagbar ist, wobei durch die Photodetektoreinrichtung ein der Lichtintensität des Interferenzsignals entsprechendes Signal lieferbar ist, mit dem der Verstärker mit dem nachgeschalteten Analog/Digital-Wandler (2) beaufschlagbar ist, dessen Ausgangssignale in der Auswerteschaltung verarbeitbar sind, und wobei
mithilfe eines Hauptregelkreises der Auswerteschaltung ein digitales Phasenrückstellsignal erzeugbar und an den Digital/Analog-Wandler (3) zur Gewinnung eines den Phasenmodulator beaufschlagenden Rückstellsignals lieferbar ist,
**dadurch gekennzeichnet, dass**
der Ausgang des Analog/Digital-Wandlers (2) und damit die in dem Hauptregelkreis verarbeiteten Ausgangssignale sowie das Phasenrückstellsignal eine erste Wortbreite aufweisen;
der Eingang des Digital/Analog-Wandlers (3) und damit das den Phasenmodulator beaufschlagende Rückstellsignal eine zweite Wortbreite aufweist, die kleiner ist als die Wortbreite, mit der im digitalen Teil des Hauptregelkreises das Modulations- und Rückstellsignal berechnet werden,
wobei die Auswerteschaltung derart ausgebildet ist, dass ein Restwertsignal mit einer dritten Wortbreite erzeugbar ist, das über den Addierer (5) dem Ausgangssignal des Analog/Digital-Wandlers (2) hinzufügbar ist, sodass der Signalausgang des Addierers (5) in dem Hauptregelkreis verarbeitbar ist, wobei diese dritte Wortbreite der Anzahl der überzähligen niederwertigen Bits entspricht, die von der Auswerteschaltung berechnet werden, aber nicht an den Digital-/Analogwandler (3) angelegt werden können, da dieser die kleinere zweite Wortbreite aufweist;
die Auswerteschaltung, der Analog/Digital-Wandler (2) und der Digital/Analog-Wandler (3) in durch einen Taktgeber vorgegebenen und synchronisierten Takten arbeiten, die Auswerteschaltung einen Restwertdifferenz-Berechnungsabschnitt (6, 7) zum Berechnen einer Restwertdifferenz zwischen dem Restwertsignal eines ersten Taktes und dem Restwertsignal eines weiteren Taktes aufweist; und
der erste Multiplizierer (9) die Restwertdifferenz mit einem in der Auswerteschaltung erzeugten Vorzeichen des aktuellen Modulationssignals multipliziert, und diese vorzeichenkorrigierte Restwertdifferenz als das Restwertsignal dient.

2. Faseroptisches Sagnac-Interferometer nach Anspruch 1, **gekennzeichnet durch** eine Restwertdifferenz-Speichereinheit zum Speichern der Restwertdiffe-

3. Faseroptisches Sagnac-Interferometer nach Anspruch 1 oder 2, **gekennzeichnet durch** einen zweiten Multiplizierer zum Multiplizieren des vorzeichenkorrigierten Restwertsignals mit einem Betrag eines Verstärkungssignals eines Verstärkungsreglerstellglieds (10) der Auswerteschaltung, sodass ein verstärktes vorzeichenkorrigiertes Restwertsignal erzeugbar ist.

4. Faseroptisches Sagnac-Interferometer nach Anspruch 3, **dadurch gekennzeichnet, dass** der Betrag des Verstärkungssignals durch ein Invertieren eines Ausgangssignals des Verstärkungsreglerstellglieds (10) erzeugbar ist.

5. Faseroptisches Sagnac-Interferometer nach Anspruch 3 oder 4, **dadurch gekennzeichnet, dass** der Restwertdifferenz-Addierer (5) zum Addieren des Ausgangs des Analog/Digital-Wandlers (2) mit dem verstärkten vorzeichenkorrigiertes Restwertsignal dient.

6. Faseroptisches Sagnac-Interferometer nach Anspruch 5, **dadurch gekennzeichnet, dass**
mithilfe des Hauptregelkreises das digitale Phasenrückstellsignal auf der Grundlage des Signalausgangs des Addierers (5) erzeugbar ist und
es an den Digital/Analog-Wandler (3) zur Gewinnung des den Phasenmodulator beaufschlagenden Rückstellsignals lieferbar ist.

7. Faseroptisches Sagnac-Interferometer nach einem der Ansprüche 1 bis 6, **dadurch gekennzeichnet, dass** der erste und der zweite Takt zwei unmittelbar aufeinander folgende Takte sind.

8. Verfahren zum Steuern eines faseroptischen Sagnac-Interferometers mit einer Lichtquelle, einem Polarisator, einer Faserspule (1), einer Photodetektoreinrichtung, einem Verstärker mit einem nachgeschalteten Analog/Digital-Wandler (2), einem Digital/Analog-Wandler (3), einer Auswerteschaltung mit einem Addierer (5) und einem ersten Multiplizierer (9), und einem Phasenmodulator, wobei
zwei aus der Lichtquelle stammende, durch den Polarisator polarisierte und durch eine Strahlteilung erzeugte Lichtstrahlen in zueinander entgegengesetzten Richtungen in die Faserspule (1) eingestrahlt und anschließend wiedervereinigt werden,
die Photodetektoreinrichtung mit dem aus der Wiedervereinigung der Lichtstrahlen entstehenden Interferenzsignal nach Durchlauf durch den Polarisator beaufschlagt wird, wobei durch die Photodetektoreinrichtung ein der Lichtintensität des Interferenzsignals entsprechendes Signal geliefert wird, mit dem der Verstärker mit dem nachgeschalteten Analog/Digital-Wandler (2) beaufschlagt wird, dessen Ausgangssignale in der Auswerteschaltung verarbeitet werden, und wobei
mithilfe eines Hauptregelkreises der Auswerteschaltung ein digitales Phasenrückstellsignal erzeugt und an den Digital/Analog-Wandler (3) zur Gewinnung eines den Phasenmodulator beaufschlagenden Rückstellsignals geliefert wird,
**dadurch gekennzeichnet, dass**:
der Ausgang des Analog/Digital-Wandlers (2) und damit die in dem Hauptregelkreis verarbeitete Ausgangssignale sowie das Phasenrückstellsignal eine erste Wortbreite aufweisen; und
der Eingang des Digital/Analog-Wandlers (3) und damit das den Phasenmodulator beaufschlagende Rückstellsignal eine zweite Wortbreite aufweist, die kleiner ist als die Wortbreite, mit der im digitalen Teil des Hauptregelkreises das Modulations- und Rückstellsignal berechnet werden
wobei ein Restwertsignal mit einer dritten Wortbreite erzeugt wird, das über den Addierer (5) dem Ausgangssignal des Analog/Digital-Wandlers (2) hinzugefügt wird, sodass der Signalausgang des Addierers (5) in dem Hauptregelkreis verarbeitet wird, wobei diese dritte Wortbreite der Anzahl der überzähligen niederwertigen Bits entspricht, die von der Auswerteschaltung berechnet werden aber nicht an den Digital-/Analogwandler (3) angelegt werden können, da dieser nur eine begrenzte, kleinere Wortbreite aufweist
die Auswerteschaltung, der Analog/Digital-Wandler (2) und der Digital/Analog-Wandler (3) in durch einen Taktgeber vorgegebenen und synchronisierten Takten arbeiten,
wobei ein Restwertdifferenz-Berechnungsabschnitt (6, 7) der Auswerteschaltung eine Restwertdifferenz zwischen dem Restwertsignal eines ersten Taktes und dem Restwertsignal eines weiteren Taktes berechnet, wobei die Restwertdifferenz die dritte Wortbreite aufweist; und
der erste Multiplizierer die Restwertdifferenz mit einem in der Auswerteschaltung erzeugten Vorzeichen des aktuellen Modulationssignals multipliziert, und die Restwertdifferenz als Restwertsignal über den Addierer (5) dem Ausgangssignal des Analog/Digital-Wandlers (2) hinzugefügt wird.

## Claims

1. A fiber-optic Sagnac interferometer comprising a light source, a polarizer, a fiber coil (1), a photodetector device, an amplifier comprising an analog/digital converter (2) connected downstream, a digital/analog converter (3), an evaluation circuit comprising an adder (5) and a first multiplier (9), and a phase modulator, wherein
two light beams, which originate from the light source, which are polarized by the polarizer and which are created by means of a beam splitting can be irradiated into the fiber coil (1) in opposite directions and can be recombined subsequently and the two light beams can be modulated by means of the phase modulator, which is arranged in the fiber coil (1),
the interference signal, which is created from the recombination of the light beams, can be applied to the photodetector device, wherein a signal, which corresponds to the light intensity of the interference signal and which can be applied to the amplifier comprising the analog/digital converter (2) connected downstream, the output signals of which can be processed in the evaluation circuit, can be supplied by means of the photodetector device, and wherein
a digital phase resetting signal can be created with the help of a main control circuit of the evaluation circuit and can be supplied to the digital/analog converter (3) for obtaining a resetting signal, which acts on the phase modulator,
**characterized in that**
the output of the analog/digital converter (2) and thus the output signals, which are processed in the main control circuit, as well as the phase resetting signal, encompass a first word width:
the input of the digital/analog converter (3) and thus the resetting signal, which acts on the phase modulator, encompasses a second word width, which is smaller than the word width, with which the modulation and resetting signal are computed in the digital part of the main control circuit,
wherein the evaluation circuit is formed such that a residual value signal comprising a third word width can be created, which can be added to the output signal of the analog/digital converter (2) via the adder (5), so that the signal output of the adder (5) can be processed in the main control circuit, wherein this third word width corresponds to the number of the surplus, low-value bits, which are computed in the evaluation circuit, but which cannot be applied to the digital/analog converter (3), because it encompasses the smaller second word width;
the evaluation circuit, the analog/digital converter (2) and the digital/analog converter (3) operate in work cycles, which are predetermined and synchronized by means of a clock-pulse generator,
the evaluation circuit encompasses a residual value difference computation section (6, 7) for computing a residual value difference between the residual value signal of a first work cycle and the residual value signal of a further work cycle, and
the first multiplier (9) multiplies the residual value difference with an algebraic sign of the current modulation signal, which is created in the evaluation circuit. and this algebraic sign-corrected residual value difference serves as the residual value signal.

2. The fiber-optic Sagnac interferometer according to claim 1, **characterized by** a residual value difference storage unit for storing the residual value difference.

3. The fiber-optic Sagnac interferometer according to claim 1 or 2, **characterized by** a second multiplier for multiplying the algebraic sign-corrected residual value signal with an amount of an amplification signal of an amplification control element (10) of the evaluation circuit, so that an amplified algebraic sign-corrected residual value signal can be created.

4. The fiber-optic Sagnac interferometer according to claim 3, **characterized in that** the amount of the amplification signal can be created by inverting an output signal of the amplification control element (10).

5. The fiber-optic Sagnac interferometer according to claim 3 or 4, **characterized** tin that the a residual value difference adder (5) serves for adding the output of the analog/digital converter (2) to the amplified algebraic sign-corrected residual value signal.

6. The fiber-optic Sagnac interferometer according to claim 5, **characterized in that**
the digital phase resetting signal can be created with the help of the main control circuit on the basis of the signal output of the adder (5) and
can be supplied to the digital/analog converter (3) for obtaining the resetting signal, which acts on the phase modulator.

7. The fiber-optic Sagnac interferometer according to any one of claims 1 to 6, **characterized in that** the first and the second work cycle are two work cycles, which follow one another immediately.

8. A method for controlling a fiber-optic Sagnac interferometer, comprising a light source, a polarizer, a fiber coil (1), a photodetector device, an amplifier comprising an analog/digital converter (2) connected downstream, a digital/analog converter (3), an evaluation circuit comprising an adder (5) and a first multiplier (9), and a phase modulator, wherein
two light beams, which originate from the light source, which are polarized by the polarizer and which are created by means of a beam splitting, are irradiated into the fiber coil (1) in opposite directions and are recombined subsequently,
the interference signal, which is created from the recombination of the light beams, is applied to the photodetector device after passing through the polarizer, wherein a signal, which corresponds to the light intensity of the interference signal and which is applied to the amplifier comprising the analog/digital converter (2) connected downstream, the output signals of which are processed in the evaluation circuit, is supplied by means of the photodetector device, and wherein
a digital phase resetting signal is created with the help of a main control circuit of the evaluation circuit and is supplied to the digital/analog converter (3) for obtaining a resetting signal, which acts on the phase modulator,
**characterized in that**:
the output of the analog/digital converter (2) and thus the output signals, which are processed in the main control circuit, as well as the phase resetting signal, encompass a first word width; and
the input of the digital/analog converter (3) and thus the resetting signal, which acts on the phase modulator, encompasses a second word width, which is smaller than the word width, with which the modulation and resetting signal are computed in the digital part of the main control circuit,
wherein a residual value signal comprising a third word width, which is added via the adder (5) to the output signal of the analog/digital convert (2), is created, so that the signal output of the adder (5) is processed in the main circuit,
wherein this third word width corresponds to the number of the surplus, low-value bits, which are computed by the evaluation circuit, but which cannot be applied to the digital/analog converter (3), because it only encompasses a limited, smaller word width,
the evaluation circuit, the analog/digital converter (2) and the digital/analog converter (3) operate in work cycles, which are predetermined and synchronized by means of a clock-pulse generator,
wherein a residual value difference computation section (6, 7) computes a residual value difference between the residual value signal of a first work cycle and the residual value signal of a further work cycle, wherein the residual value difference encompasses the third word width; and
the first multiplier multiplies the residual value difference with an algebraic sign of the current modulation signal, which is created in the evaluation circuit, and
the residual value difference is added to the output signal of the analog/digital converter (2) via the adder (5).

## Revendications

1. Interféromètre Sagnac à fibres optiques comportant une source de lumière, un polariseur, une bobine de fibre (1), un système de photodétecteur, un amplificateur avec un convertisseur analogique/numérique en aval (2), un convertisseur numérique/analogique (3), un circuit d'analyse doté d'un additionneur (5) et d'un premier multiplicateur (9), et un modulateur de phases, dans lequel
deux des rayons de lumière provenant de la source de lumière, polarisés par le polarisateur et générés par un dédoublement de faisceau peuvent irradier dans des directions opposées l'une par rapport à l'autre dans la bobine de fibre (1) et peuvent être ensuite réunis et les deux rayons de lumière peuvent être modulés au moyen du modulateur de phase disposé dans la bobine de fibre (1),
le système de photodétecteur peut être sollicité avec le signal d'interférence issu de la réunion des rayons de lumière, dans lequel par le système de photodétecteur, un signal correspondant à l'intensité lumineuse du signal d'interférence peut être délivré, avec lequel l'amplificateur peut être sollicité avec le convertisseur analogique/numérique en aval (2) dont des signaux de sortie peuvent être traités dans le circuit d'analyse, et dans lequel,
à l'aide d'un circuit de réglage principal du circuit d'analyse, un signal de réinitialisation de phases numérique peut être généré et peut être délivré au convertisseur numérique/analogique (3) pour obtenir un signal de réinitialisation qui sollicite le modulateur de phases,
**caractérisé en ce que**
la sortie du convertisseur analogique/numérique (2) et ainsi les signaux de sortie traités dans le circuit de réglage principal ainsi que le signal de réinitialisation de phases présentent une première largeur de mot ;
l'entrée du convertisseur numérique/analogique (3) et ainsi le signal de réinitialisation qui sollicite le modulateur de phases présente une deuxième largeur de mot qui est plus petite que la largeur de mot avec laquelle dans la partie numérique du circuit de réglage principal, les signaux de modulation et de réinitialisation sont calculés,
dans lequel le circuit d'analyse est conçu de telle sorte
qu'un signal de valeur résiduelle peut être généré avec une troisième largeur de mot, qui peut être ajouté par l'additionneur (5) au signal de sortie du convertisseur analogique/numérique (2) de sorte que la sortie de signal de l'additionneur (5) peut être traitée dans le circuit de réglage principal,
dans lequel cette troisième largeur de mot correspond au nombre de bits excédentaires de valeur inférieure qui sont calculés par le circuit d'analyse mais ne peuvent pas être appliqués au convertisseur numérique/analogique (3), car celui-ci présente la deuxième largeur de mot inférieure ;
le circuit d'analyse, le convertisseur analogique/numérique (2) et le convertisseur numérique/analogique (3) fonctionnent à une cadence prédéterminée et synchronisée par une horloge,
le circuit d'analyse présente une section de calcul de différence de valeur résiduelle (6, 7) pour le calcul d'une différence de valeur résiduelle entre le signal de valeur résiduelle d'une première cadence et le signal de valeur résiduelle d'une autre cadence ; et
le premier multiplicateur (9) multiplie la différence de valeur résiduelle avec un signe algébrique du signal de modulation actuel généré dans le circuit d'analyse, et cette différence de valeur résiduelle corrigée par un signe algébrique sert de signal de valeur résiduelle.

2. Interféromètre Sagnac à fibres optiques selon la revendication 1, **caractérisé par** une unité de mémoire de la différence de valeur résiduelle pour l'enregistrement de la différence de valeur résiduelle.

3. Interféromètre Sagnac à fibres optiques selon la revendication 1 ou 2, **caractérisé par** un deuxième multiplicateur pour la multiplication du signal de valeur résiduelle corrigé par un signe algébrique avec une amplitude d'un signal d'amplification d'un actionneur de régulation d'amplification (10) du circuit d'analyse, de sorte qu'un signal de valeur résiduelle renforcé corrigé par un signe algébrique puisse être généré.

4. Interféromètre Sagnac à fibres optiques selon la revendication 3, **caractérisé en ce que** l'amplitude du signal de renforcement peut être générée par une inversion d'un signal de sortie de l'actionneur de régulation d'amplification (10).

5. Interféromètre Sagnac à fibres optiques selon la revendication 3 ou 4, **caractérisé en ce que** l'additionneur de différence de valeur résiduelle (5) sert à l'addition de la sortie du convertisseur analogique/numérique (2) avec le signal de valeur résiduelle renforcé, corrigé par un signe algébrique.

6. Interféromètre Sagnac à fibres optiques selon la revendication 5, **caractérisé en ce que**
à l'aide du circuit de réglage principal, le signal de réinitialisation de phases numérique peut être généré sur la base de la sortie de signal de l'additionneur (5) et
il peut être délivré au convertisseur numérique/analogique (3) pour obtenir le signal de réinitialisation qui sollicite le modulateur de phases.

7. Interféromètre Sagnac à fibres optiques selon l'une quelconque des revendications 1 à 6,
**caractérisé en ce que** la première et la deuxième cadence sont deux cadences immédiatement consécutives.

8. Procédé de commande d'un interféromètre Sagnac à fibres optiques avec une source de lumière, un polarisateur, une bobine de fibre (1),
un système de photodétecteur, un amplificateur avec un convertisseur analogique/numérique en aval (2), un convertisseur numérique/analogique (3), un circuit d'analyse doté d'un additionneur (5) et un premier multiplicateur (9), et un modulateur de phases, dans lequel
deux des rayons de lumière provenant de la source de lumière, polarisés par le polarisateur et générés par un dédoublement de faisceau irradient dans des directions opposées l'une par rapport à l'autre dans la bobine de fibre (1) et sont ensuite réunis,
le système de photodétecteur est sollicité avec le signal d'interférence provenant de la réunion des rayons de lumière après passage dans le polarisateur, dans lequel par le système de photodétecteur, un signal correspondant à l'intensité lumineuse du signal d'interférence est délivré, avec lequel l'amplificateur est sollicité avec le convertisseur analogique/numérique en aval (2) dont des signaux de sortie sont traités dans le circuit d'analyse, et dans lequel
à l'aide d'un circuit de réglage principal du circuit d'analyse, un signal de réinitialisation de phase numérique est généré et est délivré au convertisseur numérique/analogique (3) pour obtenir un signal de réinitialisation qui sollicite le modulateur de phases,
**caractérisé en ce que** :
la sortie du convertisseur analogique/numérique (2) et ainsi les signaux de sortie traités dans le circuit de réglage principal ainsi que le signal de réinitialisation de phases présentent une première largeur de mot ; et
l'entrée du convertisseur numérique-analogique (3) et ainsi le signal de réinitialisation qui sollicite le modulateur de phases présente une deuxième largeur de mot qui est plus petite que la largeur de mot avec laquelle dans la partie numérique du circuit de réglage principal, les signaux de modulation et de réinitialisation sont calculés,
dans lequel un signal de valeur résiduelle est généré avec une troisième largeur de mot, qui peut être ajouté par l'additionneur (5) au signal de sortie du convertisseur analogique/numérique (2) de sorte que la sortie de signal de l'additionneur (5) est traitée dans le circuit de réglage principal,
dans lequel cette troisième largeur de mot correspond au nombre de bits excédentaires de valeur inférieure qui sont calculés par le circuit d'analyse mais ne peuvent pas être appliqués au convertisseur numérique/analogique (3), car celui-ci ne présente qu'une largeur de mot inférieure limitée,
le circuit d'analyse, le convertisseur analogique/numérique (2) et le convertisseur numérique/analogique (3) fonctionnent à une cadence prédéterminée et synchronisée par une horloge,
dans lequel une section de calcul de différence de valeur résiduelle (6, 7) du circuit d'analyse calcule une différence de valeur résiduelle entre le signal de valeur résiduelle d'une première cadence et le signal de valeur résiduelle d'une autre cadence,
dans lequel la différence de valeur résiduelle présente la troisième largeur de mot ; et
le premier multiplicateur multiplie la différence de valeur résiduelle avec un signe algébrique du signal de modulation actuel généré dans le circuit d'analyse, et la différence de valeur résiduelle est ajoutée en tant que signal de valeur résiduelle par l'additionneur (5) au signal de sortie du convertisseur analogique/numérique (2).
